# EUROPEAN PATENT SPECIFICATION

(11) **EP 3 051 260 B1**
(45) Date of publication and mention of the grant of the patent: **19.12.2018**
(21) Application number: 14766220.9
(22) Date of filing: 13.08.2014
(51) Int. Cl.: G01F 23/26, G01F 23/04

(54) **INTRUSIVE LEVEL PROBE**
AUFDRINGLICHE FÜLLSTANDSSONDE
SONDE DE NIVEAU INTRUSIVE

(30) Priority: 16.08.2013 PT 10712113
(43) Date of publication of application: 03.08.2016
(73) Proprietor: Watgrid, Lda., 3840-259 Gafanha da Boa-hora (PT)
(72) Inventor: LIBÓRIO GRAÇA, Paulo Jorge, P-3840-432 Vagos (PT)
(74) Representative: Ferreira, Maria Silvina
(86) International application number: PCT/IB2014/063895
(87) International publication number: WO 2015/022652

(56) References cited:
- EP-A1- 0 811 796
- EP-A1- 2 618 117
- GB-A- 795 189
- US-A- 4 052 901
- US-A- 4 412 270
- US-A- 4 518 956
- US-A- 4 904 878
- US-A1- 2012 067 757
- US-A1- 2013 125 645

## Description

### Technical Field

This application describes an invasive level probe.

### Prior Art

Currently the technology of electronic base assumes an increasingly important role in societies. Particularly the electrical automations allow an increasingly efficient execution of tasks formerly unfeasible directly by human hands. In the center of a range of currently existing electrical and electronic devices, there are command and control systems which read data/information from sensory devices, then commanding other devices that perform certain tasks to suit the various needs, systems or functionalities of a machine. There are generally sensor devices such as probes, detectors, switches, etc, at the entrance of these calculation and command systems. These devices are becoming increasingly important due to its effectiveness given the physical parameters they intend to detect or measure. The increasing accuracy of these devices, as well as their functional versatility, mean an increase in the efficiency of the systems or machines they are associated with, which often results in a better operational safety.

As for the prior art, and specifically, the application of low cost monitoring of the liquid level with invasive probes, these generally consist of rigid tubes. The level measurement is usually performed by turning on/off a set of magnetic switches that are inside one of its tubes which is switched on/off via a magnetic buoy floating in the fluid and flowing on the outside along that tube. Other measuring methods include the use of capacitive systems, despite always using rigid bodies.
Document US4518956 describes an electrical detector of liquid level, condenser type, comprising an electrode assembly which includes a pair of electrodes to be immersed in oil inside a container, an assembly of electrical circuit featuring a power detection circuit to generate a response signal that indicates the oil level dependent on the electrostatic capacity between the electrodes and a flexible tubular guide of conductive material fixed at one end of the mentioned electric circuit. However, this document does not present any probe having a body consisting of a flexible ringed tube which in turn contains within drilled plastic parts allowing a more accurate measurement.

### Summary

The invention is an invasive capacitive level probe comprising a body and a head, said body comprising a flexible ringed non watertight tube formed by a metal strip rolled upon itself into a downward or upward spiral construction, said metal strip, being machined in the shape of an 'S', is rolled upon itself so that the 'S'-shape top flap snaps into the 'S'-shape lower flap along its length and said tube contains, within it, guiding elements intersected by an electrical wire.

In an embodiment, the electric wire used in the invasive capacitive level probe is coated with a dielectric material.

In another embodiment, the head of the invasive level probe houses the electronics for detection and/or processing and/or formatting of the information on the level of fluid present in the container.

In an embodiment, the connection between the head and the flexible tube of the invasive level probe is made through a coaxial cable.
In an embodiment, the invasive level probe includes one foot.
In another embodiment, the head of the invasive level probe includes an analogue block and/or a digital block and/or a signal interface block and/or communication protocols with the outside.
In a further embodiment, the electrical wire guiding elements of the invasive level probe are produced in dielectric material.

In another embodiment, the foot of the invasive level probe includes a particle filter.
In an embodiment, the flexible conducting wire of the invasive level probe is produced with conducting metal and/or features an isolation made of a polymer.
In another embodiment, the flexible conducting wire of the invasive level probe is buffered or sealed on at least one end.

In a further embodiment, the analogue block of the invasive level probe is divided into two modules which reflect the environmental and metrological variables.

In an embodiment, the digital block of the invasive level probe comprises a module consisting of one microcontroller or another digital processing device and another input and output management system module.

In another embodiment, the signal interface block of the invasive level probe is controlled by a microcontroller or another digital processing device.

### General Description

This application describes an invasive level probe for liquids.

The probe here presented requires no moving parts to perform its metrological function. In particular, it has the following advantages:
- It can be applied in a curved container, which in the case of rigid probes known in the prior art may not be applicable or functionally viable. In this type of containers it is necessary to provide a set of parameters to the probe so that it can correctly process the level or volume of the fluid;
- The construction topology of the probe body enables a high resistance to adverse mechanical actions without compromising in a relevant way its metrological ability and functioning, rendering it very competitive in several applications;
- The flexibility of the probe assures that any mechanical action over the container will not hinder in an effective way the possibility of obtaining a level reading, even if it is only approximate to reality since the deformation of the container due to mechanical action often violates the volumetry of the container resulting in an inevitable metrological error;
- Its embodiments may result in practical solutions for mobile applications and/or practical solutions for transport, especially in the case of probes with very long bodies. In such cases there is a clear problem of transport of rigid probes which is completely overcome with the probe here presented, since the bodies of the probes may be rolled up for transport.

It may have the most diverse applications, especially, in the automotive area and the industrial area in general. The probe here presented is an excellent example of an automotive application, mainly for trucks, transport or working heavy duty vehicles such as buses, earthmoving machinery, etc. For example in the case of earthmoving machinery and certain kinds of trucks this technology is particularly important. These vehicles are currently using rigid probes with moving parts, usually based on a magnetic buoy that moves along a rigid tube. That buoy floats in the fluid, often diesel, causing some problems, malfunctions and/or failures due to warping resulting from mechanical actions on the tank and consequently on the probe. Those mechanical actions deform the tank which in turn deforms its rigid body causing the buoy to stop moving freely and thus hinder a reliable reading of the fluid level.

The device described in this application thus emerges as an innovative solution of linear measure, and therefore, a metrological device, invasive and differentiating for its ability to adapt to applications which require flexibility from the sensing device. Compared with the prior art, the device here presented makes it possible to overcome measuring difficulties especially when by mechanical action on the tank its rigid tubing suffers plastic deformation, whereby the magnetic buoy is no longer able to float freely along the tube, thus being prevented from properly performing its task. This device now disclosed also enables greater measurement accuracy because it allows measuring scales with fairly minor pace.

### Brief description of the drawings

The above will be better understood through the following non-limiting detailed description of preferred embodiments, with reference to the appended drawings.
Figure 1 illustrates an embodiment of the invasive capacitive level probe, in which the reference numbers show:
   101 - Head;
   102 - Body;
   103 - Foot.
Figure 2 illustrates body 102 of the invasive level probe sectioned in its fundamental parts, in which the reference numbers show:
   201 - Electrical wire;
   202 - Flexible tube;
   203 - Guiding element of the electrical wire.
Figure 3 illustrates a part of the longitudinal section of body 102, in which the reference numbers show:
   201 - Electrical wire;
   202 - Flexible tube;
   203 - Guiding element of the electrical wire.
Figure 4 illustrates the block diagram that may form the electronic part of the probe, in which the reference numbers show:
   401 - Analogue block;
   402 - Digital block;
   403 - Interface block;
   404 - Referencing analogue block;
   405 - Detection analogue block;
   406 - Digital processing;
   407 - Human interface block;
   408 - Communication interface;
   409 - Input/Output of digital information of setup, control or data reading.

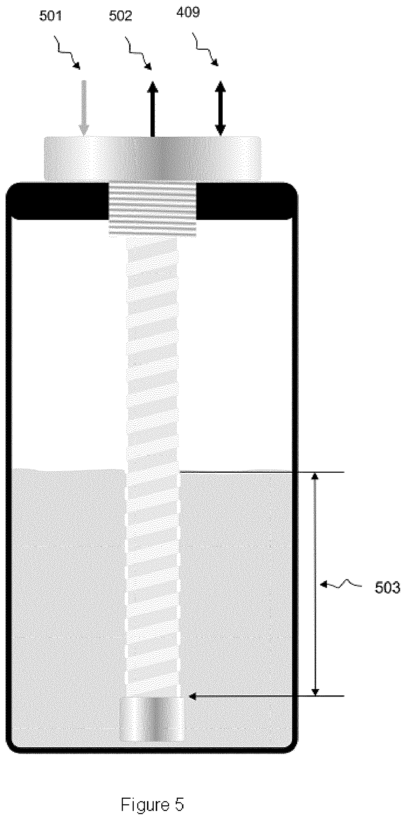

Figure 5 illustrates a graphical model of an installation of the probe embodiment, in which the reference numbers show:
   409 - Input/Output of digital information of setup, control or data reading;
   501 - Power supply of the probe;
   502 - Analogue output of level information or other quantizing parameter;
   503 - Measured liquid level.

### Description of embodiments

Next, the probe will be described referring a few embodiments which, however, are not intended to limit the scope of the present patent application.

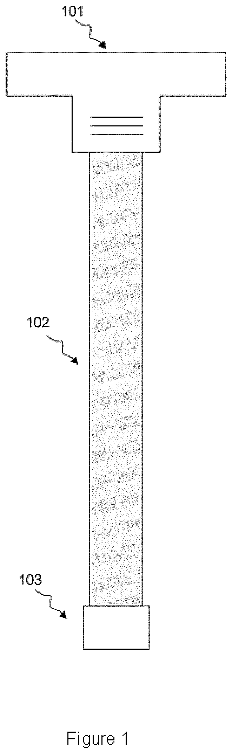

The embodiment of the device described in this application consists of one head, body and foot, as shown in Figure 1. However, a final product may not even have the foot part, and various dimensional characterizations may also exist, varying the value of the dimensions of each element in intervals of reasonable and adequate values.

The probe head houses all the electronics necessary for detection, processing and formatting the information output concerning fluid level present in the container. In this application, it is understood as information on the fluid level, the value of the level or any variable dependent on that level, such as volume. That electronics consists basically of a combination of passive and active interconnected electronic components based on circuits specially designed and calculated for the purpose. The result may be analogue or digital depending only on each embodiment in particular.
The shape of the probe head may not be cylindrical as per the model on figure 1, but, this will reflect the large majority of the embodiments. The raw material it is made of is mostly a metal, although other embodiments may arise by using another raw material such as a polymer, for example. The body of the probe consists of a flexible metal tube having inside guiding elements of the electrical wire intersected by a flexible conducting wire that can be isolated by a flexible polymer. The metal tube is non watertight in some areas and have a ringed shape. In the embodiment used to describe this case, the guiding elements of the electrical wire may be spherical. The primary function of these guiding elements of the electrical wire is to keep this wire isolated and as centered as possible inside the flexible tube. These guiding elements of the electrical wire may be made of dielectric material and are essentially used to ward off the wire from the inner walls of the flexible tube.

The connection between the head and the body of the probe can be made with a coaxial cable, although other solutions enabling such a connection may be considered.

The flexible tube used in the probe body is not watertight at its bottom or along its length. The inner wire is a single wire with a multiple number of twists along the body. This wire cannot have a direct electrical contact with the center, and for that it may have, for example, a coating.

The foot of the probe is made of a raw material similar to that used in the probe head, and can therefore be metal or plastic. Its function is to be a part of the end, which may or may not include a particle filter and that serves mainly for mechanical protection so that no mechanical damages will affect the probe body.

Generally speaking, the probe is based on two parts, the Mechanical Part (MP) and the Electronic Part (EP).

The MP is composed by the three previously mentioned parts, namely the probe comprising a head, a body and optionally a foot. The EP may be composed by an analogue block, a digital block and a block of signal interface and communication protocol with the outside.

### Body 102

Body 102, as per figure 1, is of utmost importance in the differentiation of such a probe in relation to the prior art.

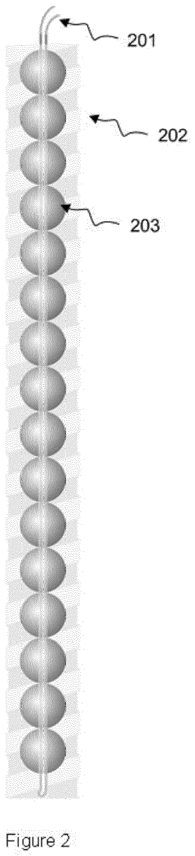

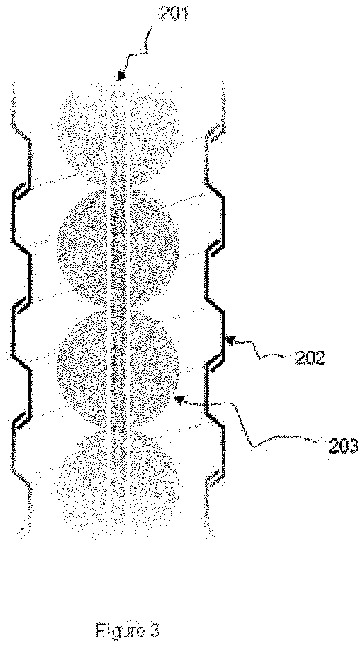

Figure 2 illustrates a possible sectioning of body 102 in its fundamental parts and which are integral parts of the block itself. Figure 3, in turn, is a part of the longitudinal section of the flexible metal tube, which details its design.

As per figure 2, body 102 consists of electrical wire 201, the guiding elements of the conducting wire 203 and flexible tube 202.

### Flexible tube 202

The flexible tube is not watertight and its production consists of machining a metal strip, in the shape of an 'S', with a given length which is in relation with the final length of the tube. The mentioned shape may be seen in one element of figure 3. The strip is then rolled upon itself into a downward or upward spiral construction, so that the top flap snaps into the lower flap along its length, as per figures 2 and 3. The end of this construction results in a flexible tube formed by non watertight rings and a length depending on the height of the machined 'S', which in turn depends on the width of the strip and the desired 'thickness' of the tube, and the number of turns or spirals rolled around themselves.

Considering that in this case there is no gluing or welding between the adjacent 'S' flaps, it is clear that the gas and the fluid remaining inside and outside the tube, may easily be transferred between its interior and exterior, especially, whenever the tube is subject to some vibration. The fact that the tube is not totally watertight has many advantages and results in greater speed and accuracy in the detection and determination of the fluid level, with no measurable loss of the capacitive effect which is the basis for the technological support of the probe here presented. The metal alloy which forms this tube will depend on each embodiment, though stainless steel and aluminum will be the most commonly used raw materials.

### Guiding elements of electrical wire 203

These guiding elements of the electrical wire are located inside and at the center of the flexible tube and are used to keep electrical wire 201, which will go inside it, as centered as possible inside the tube. The diameter of the guiding elements must be smaller than the inner diameter of flexible tube 202. These guiding elements are drilled lengthwise to its center.

The raw material used in these guiding elements of the electrical wire can be any dielectric material, such as a polymeric material with neutral behaviour in the chemical environment in which it is integrated, the most common being the polytetrafluoroethylene.

### Flexible wire 201

Flexible wire 201 is produced with conductive metal, preferably copper, and may include an isolation based on a polymer inert to the liquid and gaseous environment in which it operates. The preferential polymer is polytetrafluoroethylene.

As per figure 2, in some embodiments the wire has a fold with a turn at the bottom and its two ends are loose at the top. However, the probe here presented can be produced with any number of turns, and this number is above or equal to zero. It should be noted that in case the number of turns is zero or an even number, one of its ends will stay at the bottom, necessarily implying its buffering or sealing, in order to prevent the conductive metal of the wire to contact directly with the fluid, avoiding the contact between the electrical poles and the fluid. It is obvious that the number of turns shall be determined to allow the passage inside the spheres, of the number of parts of the wire, which remain approximately parallel.

### Construction and assembly of the parts

The construction and characterization of the parts of body 102 is in accordance with the preceding descriptions. The assembly of a probe embodiment comprises the following steps:
- First of all the length of body 102 should be set. Obviously, this length is directly related to the height of the fluid container, where the system will be installed;
- Specific thickness and width of the strip leading to the construction of the 'S' profile are set, due to mechanical issues mainly related to the weight/length ratio of body 102 enabling the construction of the flexible tube. Consequently the inner and outer diameter of the tube to be built will depend on the previous results;
- The guiding elements of the electrical wire will also have a diameter depending on the inner diameter obtained for the flexible tube. Their weight will depend on this diameter, so that, the sizing of the wire will depend on such weight, since the wire itself will be the mechanical support of the plastic parts it goes through.

Thus, the interdependence among the parts of body 102 is clear, as it is clear that the sizing of the parts depends upon the desired length for that body, that is, in order to vary the length of an embodiment, it isn't enough to simply vary the length of the tube, of the wire and add more plastic parts, but it is also necessary to change diameters and thickness of the materials.

### Construction of a specific embodiment

The description under this subchapter concerns only the construction of the body of an embodiment without reducing the scope of protection. In the construction of a body of one of the most recent prototypes of development and evaluation of the probe metrology, the following components were used:
- Flexible tube with 10 mm inner diameter, 12 mm outer diameter and 550 mm long and non watertight construction;
- Plastic spheres with 8 mm diameter, having used a total of 68 spheres as guiding elements of the electrical wire;
- Flexible wire with a 0.5 mm² section, 120 cm long, with plastic protection and approximately 1 mm outer diameter.

The flexible wire was folded at the center. The spheres were drilled at the center, and that drilling completely crossed its diameter. Each hole has a diameter of approximately 2.5 mm. Then, the spheres are inserted one at a time in the wire. Thus, a string of spheres is obtained as per figure 2, becoming visible at the bottom the fold of the wire and at the top the two loose ends of the wire. The bottom fold will not let the spheres slip downwards, but, if the sphere drilling is such that it allows it to happen, a soft plastic tube applied crosswise within the wire fold may be used or any other fixing process.

Finally the string of spheres just had to be inserted in the tube in order to obtain body 102 of the probe. It should be noted that the end with a fold lies to the side of the foot and the one with the ends of the wire lies to the side of the probe head.

Later this body was fixed to head 101, which fixed the wire and the flexible tube to its structure so that they remain mechanically stable over the lifetime of the device. In a similar way, also foot 103 was attached to the bottom of body 102 protecting and fixing the body to the bottom.

It should also be stressed that within the head sealing and isolation were promoted between the electronics there installed and body 102, to avoid contamination of that electronics by the fluid or any gas produced.

Up to now the prototype of the probe here presented managed to measure the fluid levels, on a millimetre scale measurement, presenting permittivity between 1 and more than 100 pF/m. However, other measuring ranges may be presented depending on the application.

### Basic and joint functionality

In an embodiment, body 102 works as an electrical capacitor. The plates of that capacitor may be identified with electrical wire 201 and with flexible tube 202. The dielectric consist of all materials that are between these two elements, namely the isolator of flexible wire 201, the guiding elements of electrical wire 203, the fluid subject to the measuring level which enters the tube and the gas mixture generated by the chemical environment within the container.

Depending on the dielectric characteristics of each type of fluid subject to level measurement, different capacitive values are obtained that depend on that fluid and on its quantity inside body 102, at each moment. These values are detected between the ends of the loose wire at the top of body 102 and the metal of the flexible tube 202.

It should be stressed that with such low permittivities presented by some fluids, it may seem strange that the probe has the capacity of achieving measurements on a millimeter scale or even lower. In reality the environmental noise coming from some physical quantities may sometimes almost superimpose to the useful component of the support signal for metrology. This signal is supported by the capacitive variation which is a function of the amount of fluid within body 102. So, if it were not for the dexterity of the analogue block, as explained below, the construction of the guiding elements of the electrical wire and the non watertightness of the flexible tube, it would indeed be very difficult to obtain a reliable metrology.

As to the probe, one of the most disturbing 'noises' in the measurement stability is related to the moisture left inside flexible tube 202 due to the normal rise and fall of the fluid level. The better or faster is the drying of the fluid within flexible tube 202, the more accurate and faster will be the level measurement, in its approach to the real value. That is, when the fluid level decreases there is a tendency for a residue or a droplet of fluid to be clinging to the wall of the plastic part. That droplet will have to be removed as quickly as possible in order to reduce, in the sense of eliminating, the measurement error. This problem may be solved in two ways. On the one hand the guiding elements of electrical wire 203 are preferably made of polytetrafluoroethylene (PTFE), a polymer of low surface friction, which greatly helps the sliding of the drop. On the other hand, the wrinkled inner surface of flexible tube 202 'pulls' that drop to the interior of the concavities, or valleys, of the tube rings. Then, due to the downward spiral construction of flexible tube 202 and the lateral non watertightness, as shown in figure 3, between the flaps of the profile 'S', the drop slides down while it leaves the inner part of flexible tube 202, thus allowing a more efficient drying of the internal structure, leading to an excellent accuracy and error control.

### Analogue Block 401

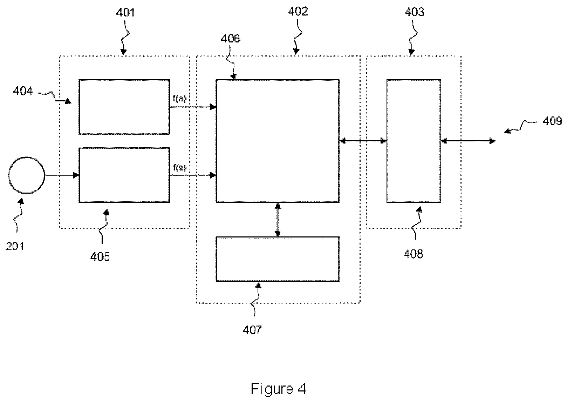

Figure 4 shows the complete block diagram which forms the whole electronic part (EP) of the probe.

Block 401 is divided into two analogue modules: Module 404 and module 405.

Module 404 is sensitive to environmental variables such as temperature, moisture and pressure, among others. Module 405 is also sensitive to these variables and additionally to the signal of disturbance of the electrical field caused by the entry and exit of fluid in flexible tube 202.

The signal from body 102 is directly coupled to module 405, through the welding of the ends of flexible wire 201 directly to the electronic motherboard, in a favourable geographical position for a good reading of that signal. That geographical position consists of arranging the electronic components of each module in the circuit, in a configuration as symmetrical as possible around the terminal on the PCB where the ends of wire 201 are welded.

The outputs of modules 404 and 405 have signals with frequency f(a) and f(s), respectively, whose variation module is non linear and contains in itself all the necessary information for further processing and determination of the fluid level, by block 402. That is, the signals are therefore treated in the frequency domain, discarding any information concerning voltage levels or electrical current.

### Digital Block 402

As shown by figure 4, this block has two main modules, digital processing 406 and human interface block 407. Digital processing 406 consists essentially of a microcontroller, and the device is responsible for reading and interpreting the signals, by formatting its output and by the algorithmic processing of the various mathematical models involved in the processing of all input and output information, that is, from the detection to the provision of information about the fluid level to the outside. Moreover it also controls the whole system activity, that is, all other electronic modules in each embodiment of the probe.

Human interface block 407 is optional, being controlled by digital processing 406 and serves only as input and output management system, for direct reading and control of the device. For example, it may contain buttons for parameter setting and a screen for display of level as well as of any other parameters. It may also contain audible warning systems for pre-programmed limit levels, relays or outputs for relay activation, etc.

Digital processing 406 runs a firmware program specially developed to operate the whole metrological and information transaction process between the system and the outside. That firmware works on the basis of three main levels of information processing at metrological level.

### 1^{st} Metrological processing level

The first level consists of treating signals f(a) and f(s), by running a mathematical model of differentiation which will extract only the useful metrological signal from the whole of the signals, discarding all noises existing there.

At the exit of this level a vector is generated which is one-dimensional and perpendicular to the plane defined by the top of the cylinder which is the head, and the value of that vector module varies either ascending or descending according to the rise or fall of the fluid level inside flexible tube 202.

### 2^{nd} Metrological processing level

At this level, the one-dimensional vector is filtered and transposed to a range of variation whose amplitude and extremes depend on the dielectric characteristics of the fluid subject to measurement.

### 3^{rd} Metrological processing level

Once that range is formed, it is now time for the process of linearization. Using algorithms based on mathematical models which adjust the range of values that the one-dimensional vector may have, to the inner shape of body 102.

Furthermore, besides the metrological processing, the microcontroller also controls all the other functional activity of the device, such as the management of the information transfer to the outside, etc.

### Signal interface block 408

This block is controlled by the microcontroller and represents the physical interface between the probe and the remote equipment that feeds, interrogates and configures it. This block is not responsible for the metrology and so it is not essential to the probe.

### Operating method

Considering the more general form of embodiment, depicted in figure 1, and its vertical application according to the model in figure 5, the probe measures the vertical distance, between the reference point and the fluid level present in the container. The reference point should be considered immediately above the foot of the probe and this should be as close as possible to the bottom of the container, seeing that below this point the container is considered empty as it falls outside the intervention area of the probe.

Thus, the operation is quite simple. While the container is being supplied the fluid keeps filling the empty space inside body 102, between the plastic parts and the flexible tube, entering the body through the bottom of the foot of the probe and through the opening existing between the flaps of the 'S' machined strip which forms the flexible tube, along its entire length in contact with the fluid.

When there is a leak the process is reversed. There is a release of fluid that lies between the spheres and the inside of the tube, as it comes out by the bottom of the foot and along the whole tube by the flaps, in the same way it got in. It should be noted that there is a small quantity of fluid crossing the hole in the spheres where flexible wire 201 passes. This movement of fluid within the probe body causes a disturbance in the electrical field which results in a capacitive variation of the capacitor which is body 102 itself. This capacitive change is therefore detected and processed by electronics, that transforms it in a metrological value of level which is later transferred to the outside, serving also for other control and display functions by the probe itself.

It is now appropriate to reinforce the idea that the probes are preferably installed upright. If the installation position is not vertical, the inclination parameter should be supplied to the probe so that it processes the level calculation taking that inclination into account. It should be noted that the metrological output data regarding the level, is initially and in fact, the fluid level within body 102.

Naturally, if the probe is not applied in an upright position, the measured level is not value H, but a Ha value found by the equation:

H = Ha * cos(a)

where 'a' is the inclination angle between the line defined by the direction of body 102 and a vertical axis which intersects a point of that direction.

Finally, it has to be referred that if the probe body is not subject to a fixed application and remains suspended within the container, as per figure 5, it is likely to swing around a vertical axis, and the measured level value will correspond to the average level value obtained as a result of that swing.

Naturally, this embodiment is in no way restricted to the embodiments described in this document and someone with average knowledge in this area may envisage many possibilities of modifying it, sticking to the general idea, as defined in the claims.

The preferential embodiments described above may obviously be combined together. The following claims define additionally some preferential embodiments.

## Claims

1. Invasive capacitive level probe comprising a body (102) and a head (101), said body (102) comprising a flexible ringed non watertight tube (202) formed by a metal strip rolled upon itself into a downward or upward spiral construction wherein said invasive capacitive level probe is **characterised by** that said metal strip, being machined in the shape of an 'S', is rolled upon itself so that the 'S'-shape top flap snaps into the 'S'-shape lower flap along its length and that said tube (202) contains, within it, guiding elements (203) intersected by an electrical wire (201).

2. Invasive level probe according to any of the preceding claims additionally comprising a foot (103).

3. Invasive level probe according to any of the previous claims wherein the electrical wire (101) is coated with dielectric material.

4. Invasive level probe according to any of the previous claims wherein the head (101) houses the electronics for detection and/or processing and/or formatting of information on the fluid level present in the container.

5. Invasive level probe according to any of the previous claims wherein the head (101) includes an analogue block (401) and/or a digital block (402) and/or a signal interface block (403) and/or communication protocols (408) with the outside.

6. Invasive level probe according to any of the previous claims wherein the connection between the head (101) and the flexible tube (202) is made via a coaxial cable.

7. Invasive level probe according to any of the previous claims, wherein the guiding elements (203) of the electrical wire (201) are made of dielectric material.

8. Invasive level probe according to any of claims 2 to 7, wherein the foot (103) includes a particle filter.

9. Invasive level probe according to any of the previous claims, wherein the electric wire (201) is made of conducting metal and/or features an isolation made of a polymer.

10. Invasive level probe according to any of the previous claims, wherein the electric (201) is buffered or sealed on at least one end.

11. Invasive level probe according to any of the previous claims, wherein the analogue block (401) is divided into two modules (404, 405) that reflect the environmental and metrological variables.

12. Invasive level probe according to any of the previous claims, wherein the digital block (402) includes a module composed of digital processing element (406) and another input and output management system module (407).

13. Invasive level probe according to any of the previous claims, wherein the signal interface block (407) is controlled by a digital processing element (406).

## Patentansprüche

1. Invasive kapazitive Füllstandssonde, bestehend aus einem Körper (102) und einem Kopf (101), wobei der genannte Körper (102) ein flexibles, ringförmiges, nicht wasserdichtes Rohr (202) umfasst, das aus einem um sich selbst gerollten Metallstreifen in einer abwärts oder aufwärtsgerichteten Spiralbauweise ausgebildet ist, wobei die genannte invasive kapazitive Füllstandssonde **dadurch gekennzeichnet ist, dass** der gennante Metallstreifen, der in S-förmiger Weise bearbeitet ist, um sich selbst gerollt wird, sodass der s-förmige obere Flansch auf der ganzen Länge in den s-förmigen unteren Flansch einrastet, und dadurch, dass das genannte Rohr (202) im Innenbereich Führungselemente (203) enthält, die von einem elektrischen Leiter (201) durchschnitten werden.

2. Invasive Füllstandssonde gemäß einem der vorstehenden Ansprüche, welche zusätzlich einen Fuß (103) umfasst.

3. Invasive Füllstandssonde gemäß einem der vorstehenden Ansprüche, wobei der elektrische Leiter (201) mit einem dielektrischen Material beschichtet ist.

4. Invasive Füllstandssonde gemäß einem der vorstehenden Ansprüche, wobei der Kopf (101) die elektronischen Elemente zur Erkennung und/oder Verarbeitung und/oder Formatierung der Informationen über den im Behälter vorhandenen Flüssigkeitsstand beinhaltet.

5. Invasive Füllstandssonde gemäß einem der vorstehenden Ansprüche, wobei der Kopf (101) einen analogen Block (401) und/oder einen digitalen Block (402) und/oder einen Signal-Schnittstellenblock (403) und/oder Kommunikationsprotokolle (408) mit dem Außenbereich enthält.

6. Invasive Füllstandssonde gemäß einem der vorstehenden Ansprüche, wobei die Verbindung zwischen dem Kopf (101) und dem flexiblen Rohr (202) über ein Koaxialkabel hergestellt wird.

7. Invasive Füllstandssonde gemäß einem der vorstehenden Ansprüche, wobei die Führungselemente (203) des elektrischen Leiters (201) aus einem dielektrischen Material hergestellt werden.

8. Invasive Füllstandssonde gemäß einem der Ansprüche 2 bis 7, wobei der Fuß (103) einen Partikelfilter enthält.

9. Invasive Füllstandssonde gemäß einem der vorstehenden Ansprüche, wobei der elektrische Leiter (201) aus einem leitfähigen Metall hergestellt wird und/oder eine Isolierung aus einem Polymer aufweist.

10. Invasive Füllstandssonde gemäß einem der vorstehenden Ansprüche, wobei der elektrische Leiter (201) zumindest an einem Ende gepuffert oder versiegelt ist.

11. Invasive Füllstandssonde gemäß einem der vorstehenden Ansprüche, wobei der analoge Block (401) in zwei Module (404, 405) aufgeteilt ist, welche die umweltbedingten und messtechnischen Variablen widerspiegeln.

12. Invasive Füllstandssonde gemäß einem der vorstehenden Ansprüche, wobei der digitale Block (402) ein aus einem digitalen Verarbeitungselement bestehendes Modul (406) und ein weiterer Eingang und Ausgang Managementsystem-Modul (407) enthält.

13. Invasive Füllstandssonde gemäß einem der vorstehenden Ansprüche, wobei der Signal-Schnittstellenblock (407) durch ein digitales Verarbeitungselement (406) gesteuert wird.

## Revendications

1. Sonde de niveau capacitive invasive comprenant un corps (102) et une tête (101), ledit corps (102) comprenant un tube annelé flexible non étanche (202) formé par une bande métallique enroulée sur elle-même en une construction en spirale dirigée vers le bas ou vers le haut dans lequel ladite sonde de niveau capacitive invasive est **caractérisée en ce que** ladite bande métallique est usinée sous la forme d'un « S », est enroulée sur elle-même de sorte que le rabat supérieur en forme de « S » s'emboîte sur le rabat inférieur en forme de « S » le long de sa longueur et que ledit tube (202) contienne en son sein des éléments de guidage (203) entrecoupés par un fil électrique (201).

2. Sonde de niveau invasive selon l'une quelconque des revendications précédentes comprenant en outre un pied (103) .

3. Sonde de niveau invasive selon l'une quelconque des revendications précédentes dans laquelle le fil électrique (101) est revêtu d'un matériau diélectrique.

4. Sonde de niveau invasive selon l'une quelconque des revendications précédentes dans laquelle la tête (101) abrite le dispositif électronique pour la détection et/ou le traitement et/ou le formatage d'informations sur le niveau de fluide présent dans le récipient.

5. Sonde de niveau invasive selon l'une quelconque des revendications précédentes dans laquelle la tête (101) comprend un bloc analogique (401) et/ou un bloc numérique (402) et/ou un bloc d'interface de signal (403) et/ou des protocoles de communication (408) avec l'extérieur.

6. Sonde de niveau invasive selon l'une quelconque des revendications précédentes dans laquelle la connexion entre la tête (101) et le tube flexible (202) est réalisée via un câble coaxial.

7. Sonde de niveau invasive selon l'une quelconque des revendications précédentes, dans laquelle les éléments de guidage (203) du fil électrique (201) sont réalisés en un matériau diélectrique.

8. Sonde de niveau invasive selon l'une quelconque des revendications 2 à 7, dans laquelle le pied (103) inclut un filtre à particules.

9. Sonde de niveau invasive selon l'une quelconque des revendications précédentes, dans laquelle le fil électrique (201) est fait d'un métal conducteur et/ou comporte une isolation faite d'un polymère.

10. Sonde de niveau invasive selon l'une quelconque des revendications précédentes, dans laquelle le dispositif électrique (201) est protégé ou scellé sur au moins une extrémité.

11. Sonde de niveau invasive selon l'une quelconque des revendications précédentes, dans laquelle le bloc analogique (401) est divisé en deux modules (404, 405) qui reflètent les variables environnementales et métrologiques.

12. Sonde de niveau invasive selon l'une quelconque des revendications précédentes, dans laquelle le bloc numérique (402) comprend un module composé d'un élément de traitement numérique (406) et un autre module de système de gestion d'entrées et de sorties (407).

13. Sonde de niveau invasive selon l'une quelconque des revendications précédentes, dans laquelle le bloc d'interface de signal (407) est commandé par un élément de traitement numérique (406).
